# EUROPEAN PATENT SPECIFICATION

(11) **EP 1 596 673 B1**
(45) Date of publication and mention of the grant of the patent: **16.12.2009**
(21) Application number: 04709394.3
(22) Date of filing: 09.02.2004
(51) Int. Cl.: A23L 3/24, A23C 3/037

(54) **A METHOD AND AN APPARATUS FOR CONTROLLING THE HOLDING TIME IN A HOLDING TUBE IN INFUSION HEATING**
VERFAHREN UND VORRICHTUNG ZUR STEUERUNG DER WARTEZEIT IN EINEM HALTEROHR BEI DER INFUSIONSERWÄRMUNG
PROCEDE ET APPAREIL DE REGULATION DU TEMPS DE RETENUE DANS UN TUBE DE RETENUE DANS UN CHAUFFAGE PAR INFUSION

(30) Priority: 13.02.2003 SE 0300387
(43) Date of publication of application: 23.11.2005
(73) Proprietor: Tetra Laval Holdings & Finance SA, 1009 Pully (CH)
(72) Inventor: CELIN, Rune, S-224 73 Lund (SE); RINGSTRÖM, Roland, S-240 14 Veberöd (SE)
(74) Representative: Forsberg, Lars-Ake
(86) International application number: PCT/SE2004/000163
(87) International publication number: WO 2004/071221

(56) References cited:
- EP-A2- 0 027 595
- WO-A1-02/060281
- WO-A2-98/46087
- SE-C2- 513 537
- US-A- 4 390 350

## Description

### TECHNICAL FIELD

The present invention relates to a method for controlling the holding time in a holding tube in infusion heating, with an infuser which consists of a pressure vessel with a conical bottom and in which the conical bottom of the pressure vessel is, for the greater part, filled by a conically-shaped body and the remaining space in the bottom of the pressure vessel consists of a holding tube.

The present invention also relates to an apparatus for controlling the holding time in a holding tube in infusion heating, the apparatus comprising an infuser which consists of a pressure vessel with a conical bottom, the pressure vessel having an inlet located in its upper region for product and an outlet located in its lower region and provided with an outlet valve, an inlet for steam, and that the conical bottom of the pressure vessel is, for the greater part, filled by a conically-shaped body and the remaining space in the bottom of the pressure vessel consist of a holding tube.

### BACKGROUND ART

Heat-treating food products for increased shelf-life is a well-known and often employed method. The food products may, for example, be various dairy produce such as milk, cream or yoghurt. The heat treatment may be put into effect in a plurality of ways, of which there are two main groups, direct and indirect heating. Indirect methods are, for example, heating by various types of heat exchangers. Among the direct methods, there are also two major groups, injection and infusion using steam. By employing a direct method, an extremely rapid heating will be obtained which today is to be sought-for. By, for example, heating milk to an elevated temperature during a very short period of time it is possible to improve the flavour properties of the milk.

The present invention relates to a method and an apparatus where use is made of infusion heating. Infusion implies that a finely divided liquid is heated in a steam chamber. The principle of heating a liquid, for example, a liquid food, by injecting the liquid into a chamber filled with steam is known from the latter part of the 19^{th} century.

In principle, the infuser consists of a pressure vessel with a conical bottom. In the upper region of the pressure vessel, there is an inlet for the product which is to be heat treated and where there is also disposed an apparatus for dividing the product into small droplets or jets which then fall down through the pressure vessel. In the bottom of the pressure vessel, the droplets are collected to a liquid accumulation and the liquid finally departs from the pressure vessel through an outlet in the bottom region of the pressure vessel. The pressure vessel also displays an inlet for steam which may be placed in the upper region of the pressure vessel or alternatively lower down in the pressure vessel. Regardless of the positioning of the steam inlet, the superheated steam is intended to heat the product droplets while on their way down through the pressure vessel.

The purpose of all modem heat treatment of food products is, on the one hand, to heat the product to a given, pre-determined temperature, and, on the other hand, to keep the product at this temperature for a given, pre-determined period of time. In connection with infusion heating, the commonest procedure is to employ a separate holding tube, i.e. a tube loop, in direct association with the product outlet of the pressure vessel. Such holding tubes are not entirely reliable, since frothing readily occurs when the product departs from the pressure vessel. One method of reducing this is to place a pump between the outlet of the pressure vessel and the holding tube. However, this is a relatively expensive solution.

Swedish Patent Specification SE 513 537 describes a holding tube which is integrated in the pressure vessel. In the conical bottom of the pressure vessel, there is disposed a conical body which takes up the greater part of the conical bottom of the pressure vessel and the interspace between the pressure vessel and the conical bottom constitutes a well-defined holding tube. This holding tube is regulated by means of an outlet valve placed in the product outlet. The outlet valve is controlled by a differential pressure. This regulation has proved to be reliable for many products, but when frothing occurs, incorrect measurement values are obtained and, as a result, a holding time which does not correspond to the pre-determined holding time.

The risk of frothing varies from product to product, but it may also depend upon steam bubbles which have not condensed. Uncondensed steam bubbles may accompany the product down into the infusion vessel if the product has already reached the desired temperature. Since the need to obtain a high product quality entailing the least possible thermal effect on the product is set against the need for a satisfactorily sterile product, it is desirable to be able to regulate the holding time with the greatest possible degree of accuracy.

### OBJECTS OF THE INVENTION

One object of the present invention is to realise a method for obtaining as accurate a regulation of the holding time as possible in connection with infusion heating and where frothing in the product does not negatively affect the regulation possibilities.

A further object of the present invention is to realise an apparatus for carrying the method according to the present invention into effect.

### SOLUTION

These and other objects have been attained according to the present invention in that the method of the type described by way of introduction has been given the characterising feature that the outlet of the pressure vessel is in communication with a vertical tube and that a float in the vertical tube controls the level in the holding tube so that the holding time of the product will be the same regardless of changes in density as a result of bubbles in the product.

The objects of the present invention have further been attained in that the apparatus of the type described by way of introduction has been given the characterising feature that the outlet of the pressure vessel is in communication with a vertical tube and that a level indicator in the vertical tube is disposed to control the level in the holding tube in that the level indicator controls the outlet valve.

Preferred embodiments of the present invention have further been given the characterising features as set forth in the appended subclaims.

### BRIEF DESCRIPTION OF THE ACCOMPANYING DRAWINGS

One preferred embodiment of the present invention will now be described in greater detail hereinbelow, with reference to the accompanying Drawings. In the accompanying Drawings:
Fig. 1 shows, partly in section, an infusion vessel; and

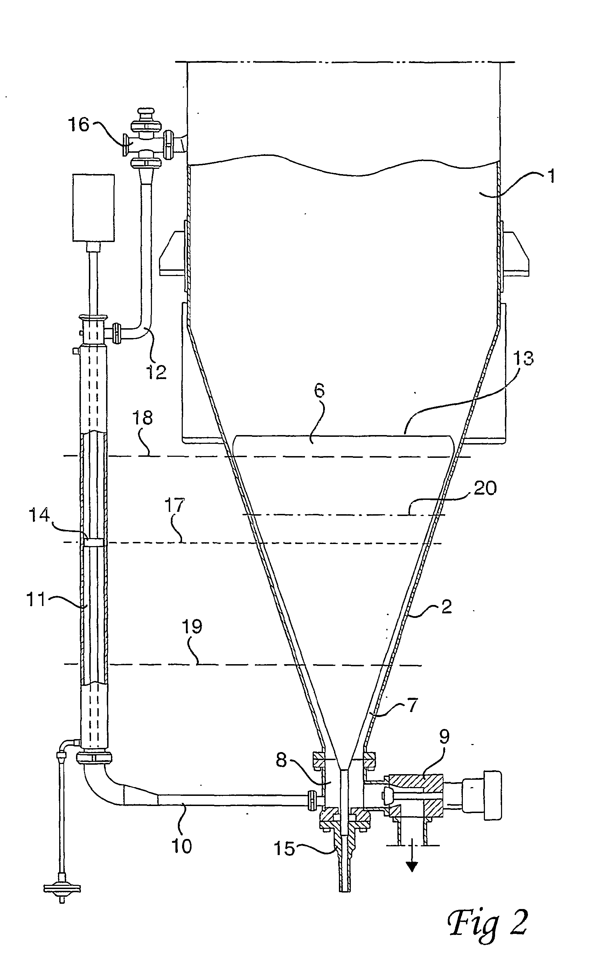

Fig. 2 shows, partly in section, the lower region of an infusion vessel.

The accompanying Drawings show only those details essential to an understanding of the present invention, and the positioning of the infuser in a heat treatment plant, which is well-known to a person skilled in the art, has been omitted.

### DESCRIPTION OF PREFERRED EMBODIMENT

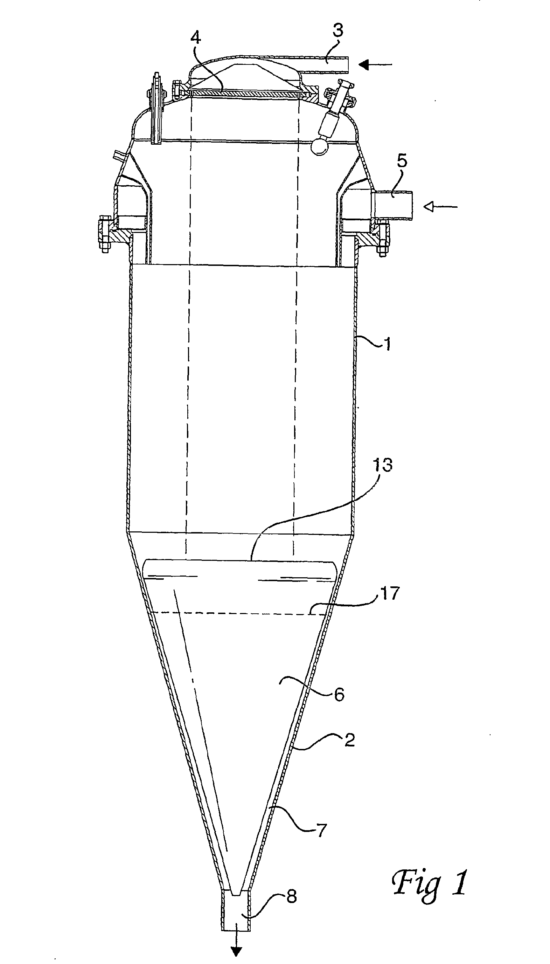

Fig. 1 shows the principle of an infuser. The infuser consists of a pressure vessel 1 with a conical bottom 2. In the upper region of the pressure vessel 1, there is disposed an inlet 3 for the product which is to be heat treated. The product may consist of a liquid dairy product, such as milk, cream or yoghurt. In association with the product inlet 3, there is disposed a device 4 for dividing the incoming product into small droplets or jets. The device 4 for finely dividing the product may, for example, consist of a distribution chamber which, in its lower wall, has a large number of holes or gaps.

The pressure vessel 1 of the infuser further displays an inlet 5 for steam. The steam inlet 5 may, as shown in Fig. 1, be concentric and be placed in the upper region of the pressure vessel 1. Alternatively, the steam inlet 5 may be of different design and may also be positioned further down in the pressure vessel 1.

In the conical bottom 2 of the pressure vessel 1, there is disposed a conically shaped body 6, which takes up the greater part of the volume which constitutes the conical bottom 2. The remaining space 7, between the conical bottom 2 and the conically shaped body 6, constitutes a holding tube. By minimising the space 7 in the infuser which constitutes an integrated holding tube entails that it is possible to achieve extremely short holding times for the product. In order to minimise the weight of the conical body 6, this maybe made hollow.

The conically shaped body 6 may have the same conical angle as the conical bottom 2 of the pressure vessel 1. In the preferred embodiment of the present invention, the conical body 6 has an angle which gives a space 7 having the same volume per millimetre, which affords an advantage in terms of regulation for the holding tube.

The conical body 6 has an upper surface 13 which is designed so that a small accumulation of heated product is formed above the conical body 6. This is to prevent the product which falls down through the pressure vessel 1 from fouling the upper surface 13 of the conical body 6.

The conical body 6 has, in its upper region, guide pins or similar devices for centring the conical body 6 in the conical bottom region 2 of the pressure vessel 1. In order to vary the capacity of the infuser while maintaining holding time for the product, the height of the positioning of the conical body 6 in the conical bottom region 2 of the pressure vessel 1 may be varied. This height may be governed by means of a switching device 15.

Lowermost, the pressure vessel 1 of the infuser is terminated by an outlet 8 for the heat-treated product. On the outlet 8, there is further disposed an outlet valve 9 which consists of a regulator valve, such as an expansion valve. From the outlet valve 9, the product is passed further, normally to a vacuum vessel (not shown) where the surplus water which the product has received as a result of the steam heating is once again removed.

A substantially horizontal conduit 10 of relatively slight diameter is connected to the outlet 8 of the pressure vessel 1. The horizontal conduit 10 is also connected to a vertical tube 11 so that the vertical tube 11, the horizontal tube 10 and the lower region of the pressure vessel 1 of the infuser form a communicating vessel.

The vertical tube 11 is connected to the wall of the pressure vessel 1 by means of a tube length 12 so that the tube sections 10, 11 and 12, as well as the pressure vessel 1, form a closed unit. As a result, condensation water from the walls of the pressure vessel 1 will run out through the tube length 12 and to the tube sections 10 and 11. The condensation water fills the horizontal tube section 10 and the tube section 11 to a pre-determined level. The pre-determined level is determined by the holding time of the product. By minimising product in the tube sections 10 and 11, the risk of fouling of product in the tube sections 10 and 11 is minimised. There is also a washing or cleaning connection 16 disposed on the tube length 12 so that the tube sections 10, 11 and 12 may be cleaned in connection with other equipment in a CIP program (Cleaning In Place).

In the vertical tube 11, there is a level indicator 14, preferably a float which has some form of contact-free sensing, such as magnetic sensing. The sensing of the position of the level indicator 14 regulates the outlet valve 9.

The liquid level 17 of the product in the holding tube determines the holding time of the product. When the product enters the pressure vessel 1 of the infuser through the inlet 3, the product is finely divided in a distributor device 4 and falls as small droplets down through the pressure vessel 1. On their way down, the product droplets meet the steam and the product is very rapidly heated to the desired temperature. The heated product continues down to the product accumulation on the upper side 13 of the conical body 6 and further down into the space 7 between the conical body 6 and the bottom region 2 of the pressure vessel 1.

The time during which the product is located in the space 7 between the conical body 6 and the bottom region 2 constitutes the holding time of the product. The holding time of the product may be varied between a maximum level for the product 18 and a minimum level 19. By a given capacity of the product inflow and a given liquid level 17, the holding time of the product will be obtained. The liquid level 17 is regulated by the intermediary of the outlet valve 9.

In that the tube sections 10 and 11, as well as the lower region of the pressure vessel 1 constitute a communicating vessel, the level indicator or float 14 will position itself on the same level as the liquid level 17 of the product. Possible variations in density between the product and the condensation water in the tube sections 10, 11 may be compensated for in the control program of the plant. In order further to ensure that the density is the same, the contents of the tube sections 10, 11 should be heated to approximately the same temperature as that of the product. This heating is suitably put into effect by means of external heating loops.

The liquid in the vertical tube 11 is stationary and free of bubbles. The liquid level 17 in the holding tube will be the same as in the tube 11 as long as the product does not contain bubbles of air or steam. The frothing is highly product-dependent, but most products may entrain bubbles of air or steam. Since it is not possible to control frothing, there is a risk of obtaining too short a holding time if the frothing becomes extensive. In that the float 14 in the vertical tube 11 determines the liquid level 17, the liquid level in the holding tube will rise to a higher level 20 if the density in the holding tube is reduced, i.e. that the product froths or contains a large number of air or steam bubbles.

As a result of the communicating vessel which is formed by the tubes or conduit 10, 11 and the lower region of the pressure vessel 1, the mass in each part of the communicating vessel will be the same and the new liquid level 20 with a frothing product will thus correspond to the liquid level 17 for a non-frothing product.

As will have been apparent from the foregoing description, the present invention realises a method and an apparatus which may be regulated simply and extremely reliably. Given that the method is so reliable, it is possible to ensure the holding time of the product. It is not necessary to overtreat the product to be certain that it is sterile. This gives products which have an improved flavour quality. The method and the apparatus also compensate for any possible frothing in the product when this stays in the holding tube.

## Claims

1. A method for controlling the holding time in a holding tube in infusion heating, with an infuser which consists of a pressure vessel (1) with a conical bottom (2) and where the conical bottom (2) of the pressure vessel (1) is, for the greater part, filled by a conically shaped body (6) and the remaining space (7) in the bottom (2) of the pressure vessel (1) consists of a holding tube, **characterised in that** the outlet (8) of the pressure vessel (1) is in communication with a vertical tube (11) and that a float (14) in the vertical tube (11) controls the level in the holding tube so that the holding time of the product will be the same regardless of changes in density in the product.

2. An apparatus for controlling the holding time in a holding tube in infusion heating, the apparatus comprising an infuser which consists of a pressure vessel (1) with a conical bottom (2), the pressure vessel (1) having an inlet (3) located in its upper region for product and an outlet (8) located in its lower region, with an outlet valve (9), an inlet (5) for steam, and the conical bottom (2) of the pressure vessel (1) being, for the greater part, filled by a conically shaped body (6) and the remaining space (7) in the bottom (2) of the pressure vessel consisting of a holding tube, **characterised in that** the outlet (8) of the pressure vessel (1) is in communication with a vertical tube (11), and that a level indicator (14) in the vertical tube (11) is disposed to control the level in the holding tube **in that** the level indicator (14) controls the outlet valve (9).

3. The apparatus as claimed in Claim 2, **characterised in that** the vertical tube (11) is sealingly connected to the pressure vessel (1) by means of a tube length (12), and that the vertical tube (11) is connected to the outlet (8) by means of a tube length (10).

4. The apparatus as claimed in Claims 2 or 3, **characterised in that** the conical body (6) is adjustable in the vertical direction.

5. The apparatus as claimed in Claim 4, **characterised in that** the conical body (6) is adjustable by means of an adjuster device (15).

## Patentansprüche

1. Verfahren zur Steuerung der Haltezeit in einem Halterohr bei der Infusionserwärmung, mit einer Infusionsvorrichtung, die aus einem Druckgefäß (1) mit einem konischen Boden (2) besteht und wobei der konische Boden (2) des Druckgefäßes (1) zum größten Teil mit einem konisch geformten Körper (6) gefüllt ist und der verbleibende Raum (7) im Boden (2) des Druckgefäßes (1) aus einem Halterohr besteht, **dadurch gekennzeichnet, dass** der Auslass (8) des Druckgefäßes (1) mit einem vertikalen Rohr (11) in Verbindung steht und dass ein Schwimmer (14) in dem vertikalen Rohr (11) den Füllstand im Halterohr so steuert, dass die Haltezeit des Produkts unabhängig von Änderungen bei der Produktdichte gleich bleibt.

2. Vorrichtung zur Steuerung der Haltezeit in einem Halterohr bei der Infusionserwärmung, wobei die Vorrichtung eine Infusionsvorrichtung umfasst, die aus einem Druckgefäß (1) mit einem konischen Boden (2) besteht, wobei das Druckgefäß (1) einen in seinem oberen Bereich befindlichen Einlass (3) für Produkt und einen in seinem unteren Bereich befindlichen Auslass (8) mit einem Auslassventil (9) und einen Einlass (5) für Dampf aufweist, wobei der konische Boden (2) des Druckgefäßes (1) zum größten Teil mit einem konisch geformten Körper (6) gefüllt ist und der verbleibende Raum (7) im Boden (2) des Druckgefäßes aus einem Halterohr besteht, **dadurch gekennzeichnet, dass** der Auslass (8) des Druckgefäßes (1) mit einem vertikalen Rohr (11) in Verbindung steht und dass eine Füllstandsanzeige (14) im vertikalen Rohr (11) dazu angeordnet ist, den Füllstand im Halterohr zu steuern, indem die Füllstandsanzeige (14) das Auslassventil (9) steuert.

3. Vorrichtung nach Anspruch 2, **dadurch gekennzeichnet, dass** das vertikale Rohr (11) mittels einer Rohrlänge (12) abdichtend mit dem Druckgefäß (1) verbunden ist und dass das vertikale Rohr (11) mittels einer Rohrlänge (10) mit dem Auslass (8) verbunden ist.

4. Vorrichtung nach Anspruch 2 oder 3, **dadurch gekennzeichnet, dass** der konische Körper (6) in Vertikalrichtung einstellbar ist.

5. Vorrichtung nach Anspruch 4, **dadurch gekennzeichnet, dass** der konische Körper (6) mittels einer Einstellvorrichtung (15) einstellbar ist.

## Revendications

1. Procédé pour contrôler le temps de retenue dans un tube de retenue dans un système de chauffage par infusion, comprenant un infuseur qui est constitué d'un récipient de pression (1) avec un fond conique (2) et dans lequel le fond conique (2) du récipient de pression (1), pour la majeure partie, est rempli d'un corps de forme conique (6) et l'espace restant (7) au fond (2) du récipient de pression (1) est constitué d'un tube de retenue, **caractérisé en ce que** la sortie (8) du récipient de pression (1) est en communication avec un tube vertical (11) et **en ce qu'**un flotteur (14) dans le tube vertical (11) contrôle le niveau dans le tube de retenue de sorte que le temps de retenue du produit soit le même indépendamment des changements de densité du produit.

2. Appareil pour contrôler le temps de retenue dans un tube de retenue dans un système de chauffage par infusion, l'appareil comprenant un infuseur qui est constitué d'un récipient de pression (1) avec un fond conique (2), le récipient de pression (1) ayant une entrée (3) située dans sa région supérieure pour le produit et une sortie (8) située dans sa région inférieure, avec une vanne de sortie (9), une entrée (5) pour la vapeur, et le fond conique (2) du récipient de pression (1) étant, pour la majeure partie, rempli d'un corps de forme conique (6) et l'espace restant (7) au fond (2) du récipient de pression (1) étant constitué d'un tube de retenue, **caractérisé en ce que** la sortie (8) du récipient de pression (1) est en communication avec un tube vertical (11), et **en ce qu'**un indicateur de niveau (14) dans le tube vertical (11) est disposé de manière à contrôler le niveau dans le tube de retenue **en ce que** l'indicateur de niveau (14) contrôle la vanne de sortie (9).

3. Appareil selon la revendication 2, **caractérisé en ce que** le tube vertical (11) est connecté de manière hermétique au récipient de pression (1) au moyen d'une longueur de tube (12), et **en ce que** le tube vertical (11) est connecté à la sortie (8) au moyen d'une longueur de tube (10).

4. Appareil selon les revendications 2 ou 3, **caractérisé en ce que** le corps conique (6) peut être ajusté dans la direction verticale.

5. Appareil selon la revendication 4, **caractérisé en ce que** le corps conique (6) peut être ajusté au moyen d'un dispositif d'ajustement (15).
